# EUROPEAN PATENT SPECIFICATION

(11) **EP 1 250 875 B1**
(45) Date of publication and mention of the grant of the patent: **23.11.2005**
(21) Application number: 02005307.0
(22) Date of filing: 13.03.2002
(51) Int. Cl.: A47J 31/44, A47J 31/46, B01F 5/04

(54) **Device for the preparation of hot drinks such as cappuccino and the like**
Vorrichtung zur Herstellung von Heissgetränken wie Cappuccino und dergleichen
Dispositif pour la préparation de boissons chaudes tels que cappuccino et analogues

(30) Priority: 20.03.2001 IT MI010581
(43) Date of publication of application: 23.10.2002
(73) Proprietor: Vergani, Giampietro, 20060 Cassina de Pecchi (Mi) (IT)
(72) Inventor: Vergani, Giampietro, 20060 Cassina de Pecchi (Mi) (IT)
(74) Representative: Cioni, Carlo

(56) References cited:
- WO-A-00/16674
- DE-A- 19 705 633
- GB-A- 618 762
- US-A- 5 330 266
- US-A- 5 738 002

## Description

The present invention relates to a device for the preparation of cappuccino which can be easily fitted to coffee machines and can be used on expresso coffee machines in coffee-bars as well as for automatic coffee machines for use in the home or in small communities.

Devices for the preparation of cappuccino which can be fitted to coffee makers are known; for example, European Patent no. EP0195750 of SPIDEM describes a device for the production of cappuccino that provides for a conduit supplying steam from a steam generator and opening into an aspiration chamber. Said aspiration chamber is provided with a lateral conduit connected to a milk container and a conduit connected to the outside in such a way as to aspirate milk and air into said aspiration chamber by the venturi effect due to the flow of the steam. The aspiration chamber is in communication with an emulsion chamber which imparts a turbulent flow to the mixture outgoing from said aspiration chamber and is provided with an opening to deliver hot milk and an emulsion with air from said emulsion chamber. The device described has the drawback of having to provide a fairly complex emulsion chamber that is the critical part of the device of the technique. In fact, it is in the emulsion chamber that the cappuccino is formed from the warm milk drawn into the aspiration chamber from the milk container. The emulsion chamber must impart a whirling motion to the flow of milk and air to create the emulsion.

US Patent no. 4735133 in the name of the same inventor of the aforementioned European Patent claims a device for heating and emulsifying milk in order to prepare cappuccino, comprising means of delivering the steam by nozzle, conduits connected with said nozzle means for transporting the steam, means that form an aspiration chamber that encircles said nozzles, and having an opening to deliver the emulsion.

However, it has been found that if the mixture of steam, air and milk is delivered through one single opening at the extremity of the tube with the speed necessary to produce the emulsion, most of the mixture splashes out of the container destined to collect the cappuccino.

The present invention proposes to eliminate the disadvantages complained of above and to supply a device for the preparation of cappuccino, of simplified structure, adaptable to both the expresso machines for coffee bars and the lower-powered automatic machines for use in the home or in small communities.

The aim of the present invention is achieved by a device for the preparation of cappuccino or analogous drinks that is connected directly with the steam conduit or one of the existing steam conduits in every coffee maker. By the known venturi effect, the steam which passes through the device draws milk from a milk container and air through a conduit connected to the outside. The milk and air enter the steam conduit in proximity to the extremity of the conduit and the mixture of steam, air and milk is delivered directly to the outside through an endplate supplied with a plurality of holes, and exits in the form of a milk emulsion that can, if expelled into a container containing coffee, give rise to the classic cappuccino. The distance between the extremity of the conduit and lateral connections for the milk and air feed is the minimum possible so that the milk and the steam do not remain in contact for relatively long times inside the device. In fact, as pointed out above, it is necessary to prevent the formation of solid residues originating from the decomposition of milk that could block the exit holes in the plate that covers the extremity of the steam conduit. The number of the holes in the outlet plate must be as high as possible compatible with the necessity of keeping the holes as large as possible. It has been established that the size and number of holes is optimum when the outlet plate is occupied for 20-80% of its surface by holes whose size is equal to 3-20% of the total surface of the outlet plate.

The steam conduit can be comprised, favorably, by a pair of tubes inserted one inside the other so that no annular space is left between them. Preferably, a ring of elastic material (O-ring), is located in an appropriate seat on the inner tube in order to ensure the seal.

The materials used in the device according to the invention can comprise metals that resist the action of milk and its by-products and that satisfy the norms laid down for use in the food industry.

The device according to the invention will be better understood and the advantages associated with its use will be more easily appreciated from the description that follows of an embodiment of the invention illustrated in the attached drawing. The description and the attached drawing are by way of example and must not be interpreted as restricting the scope of the invention.

In the drawings:

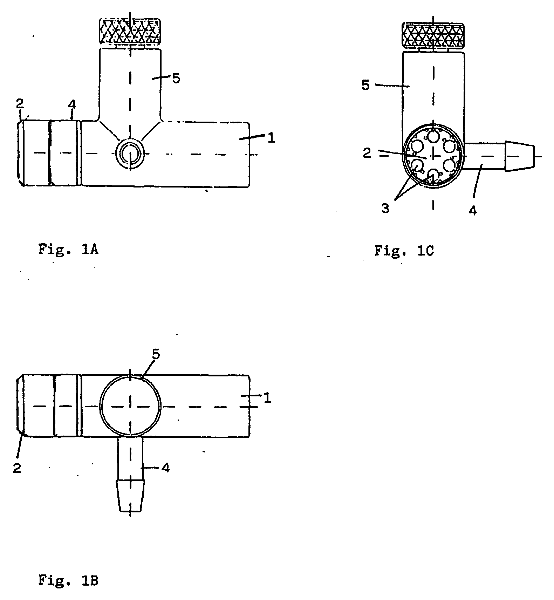

- figure 1A is a lateral view of a device for the preparation of cappuccino according to the invention;
- figure 1B is a lateral view of the device of figure 1A rotated through 90°;
- figure 1C is a front view of the device of the previous figures.

In the drawings, 1 is the steam conduit from the steam source of the coffee maker (not shown in the figures) and which finishes in an outlet plate 2 supplied with holes 3 (visible in figure 1C). The point of attachment 4 of the conduit allows the introduction of milk from an external tank (not shown). The opening 5 is ruled by the valve controling the entry of the air. As can be seen from the figures, the inlets for the supply of milk and air are found as close as possible to the mixture discharge zone at the extremity of the steam conduit in order to reduce the dwell time of the milk in the warm zone of the device.

The device operates as follows:

The pressurized steam passing through conduit 1 draws milk and air through conduits 4 and 5. The mixture of steam, air and milk is made to pass through the pierced outlet plate 2 immediately downstream of the air supply 5 and milk supply 4 and finishes in a container (not shown) where the desired amount of coffee for preparation of cappuccino is found.

Conduits 4 and 5 can be closed to allow the passage of steam alone in order to heat drinks or in order to clean the terminal part of the device.

## Claims

1. Process for the preparation of cappuccino or analogous drinks, by a device which can be fitted directly to one of the existing steam sources of a coffee maker to produce an emulsion of steam, air and milk, comprising the following steps: the steam passes through said device from an open end fitted to said steam source to a steam exiting extremity, the milk and the air enter the device in proximity of said extremity, **characterised in that** the mixture of steam, air and milk is delivered directly to the outside from said extremity, through an outlet_plate supplied with a plurality of holes, in the form of a milk emulsion which, if discharged into a receptacle containing coffee, give rise to the classic cappuccino.

2. Device for the preparation of cappuccino or analogous drinks, which can be fitted directly to one of the existing steam sources of a coffee maker, comprising:
- a steam conduit (1) comprising a steam entering open end, to be fitted on said steam source of the coffee maker, and a steam exiting extremity;
- a milk conduit (4) connecting said steam conduit (1) with a milk supply tank and entering the steam conduit (1) in proximity of said extremity;
- an air conduit (5) connecting said steam conduit (1) with the outside and entering the steam conduit (1) in proximity of said extremity; **characterized by**
- an outlet plate (2), supplied with a plurality of holes (3), provided on said extremity of said steam conduit (1).

3. Device according to claim 2. **characterized in that** said outlet plate (2) is occupied for the 20-80% of its surface by said holes (3).

4. Devise according to claim 3, **characterized in that** each of said hotels has an area equal to 3-20% of the total surface of the outlet plate.

5. Device according to claim 2, **characterized in that** said extremity of the steam conduit (1) is immediately downstream the entering connections of said milk conduit (4) and air conduit (5).

## Patentansprüche

1. Verfahren zum Herstellen von Cappuccino oder ähnlicher Getränke mittels einer Vorrichtung, die direkt an eine gegebene Dampfquelle einer Kaffeemaschine passt, um eine Emulsion aus Dampf, Luft und Milch zu erzeugen, mit den folgenden Schritten: der Dampf passiert die genannte Vorrichtung von einem offenen Ende, das an die Dampfquelle angeschlossen ist, zu einem Dampfaustrittsausleger, und die Milch und die Luft treten nahe dem genannten Ausleger in die Vorrichtung ein, **dadurch gekennzeichnet, dass** die Mischung aus Dampf, Luft und Milch von dem genannten Ausleger direkt nach außen abgegeben werden, und zwar durch eine Aüslassplatte, die mit einer Mehrzahl von Löchern versehen ist, in Form einer Milchemulsion, die, dann, wenn sie in einen Kaffee enthaltenden Behälter abgegeben wird, klassischen Cappuccino ergibt.

2. Vorrichtung zum Herstellen von Cappuccino oder gleichartigen Getränken welche direkt an eine gegebene Dampfquelle einer Kaffeemaschine anschließbar ist, folgendes aufweisend:
- einen Dampfleiter (1) mit einem offenen Ende zum Eintritt von Dampf, der an die Dampfquelle der Kaffeemaschine anschließbar ist, und mit einem Dampfaustrittsausleger;
- einen Milchleiter (4), der den genannten Dampfleiter (1) mit einem Milchvorratsbehälter verbindet und nahe dem genannten Ausleger in die Dampfleitung (1) eintritt;
- einen Luftleiter (5), der den genannten Dampfleiter (1) mit der äußeren Atmosphäre verbindet und in den Dampfleiter (1) nahe dem genannten Ausleger eintritt; **gekennzeichnet durch**
- eine Auslassplatte (2), die mit einer Mehrzahl von Löchern (3) versehen Ist und auf dem genannten Ausleger des Dampfleiters (1) angeordnet ist.

3. Vorrichtung gemäß Anspruch 2, **dadurch gekennzeichnet, dass** die Auslassplatte (2) über 20 bis 80% ihrer Oberfläche mit den genannten Löchern (3) besetzt Ist.

4. Vorrichtung gemäß Anspruch 3, **dadurch gekennzeichnet, dass** jedes der genannten Löcher eine Fläche aufweist, die 3 bis 20% der gesamten Oberfläche der Auslassplatte ausmacht.

5. Vorrichtung gemäß Anspruch 2, **dadurch gekennzeichnet, dass** der genannte Ausleger der Stromleitung (1) sich unmittelbar stromab der Zufuhrverbindung des genannten Milchleiters (4) und des Luftleiters (5) befindet.

## Revendications

1. Procédé pour la préparation de cappuccino ou de boissons similaires, à l'aide d'un dispositif qui peut être monté directement sur une des sources de vapeur existantes d'une machine de préparation de café pour produire une émulsion de vapeur, d'air et de lait, comprenant les étapes suivantes :
. la vapeur passe à travers ledit dispositif à partir d'une extrémité ouverte de cette source de vapeur vers une extrémité de sortie de vapeur,
. le lait et l'air pénètrent dans le dispositif à proximité de ladite extrémité,
**caractérisé en ce que** le mélange de vapeur, d'air et de lait est délivré directement à l'extérieur à partir de cette extrémité, à travers une plaque de sortie présentant une pluralité d'orifices, sous la forme d'une émulsion de lait qui, si elle est versée dans un récipient contenant du café, fait monter un cappuccino classique.

2. Dispositif pour la préparation de cappuccino ou de boissons similaires, qui peut être monté directement sur une des sources de vapeur existantes d'une machine de préparation de café, comprenant les éléments suivants :
. un conduit de vapeur (1) comportant une extrémité ouverte d'entrée de vapeur, prévu pour être monté sur ladite source de vapeur de la machine de préparation de café, et une extrémité de sortie de vapeur ;
. un conduit de lait (4) reliant ledit conduit de vapeur (1) à une réserve de lait et pénétrant dans le conduit de vapeur (1) à proximité de ladite extrémité ;
. un conduit d'air (5) reliant ledit conduit de vapeur (1) à la sortie et pénétrant dans le conduit de vapeur (1) à proximité de ladite extrémité ;
**caractérisé par**:
. une plaque de sortie (2), comportant une pluralité d'orifices (3), prévue sur ladite extrémité de la conduite de vapeur (1).

3. Dispositif selon la revendication 2, **caractérisé en ce que** la surface de ladite plaque de sortie (2) est occupée à 20% jusqu'à 80% par lesdits orifices (3).

4. Dispositif selon la revendication 3, **caractérisé en ce que** chacun desdits orifices présente une surface égale à 3 % jusqu'à 20% de la surface totale de la plaque de sortie.

5. Dispositif selon la revendication 2, **caractérisé en ce que** ladite extrémité de ladite plaque du conduit de vapeur (1) est située directement en aval des connexions d'entrée dudit conduit de lait (4) et dudit conduit d'air (5).
